# EUROPEAN PATENT APPLICATION

(11) **EP 4 507 144 A1**
(43) Date of publication of application: **12.02.2025**
(21) Application number: 24193579.0
(22) Date of filing: 08.08.2024
(51) Int. Cl.: H02G 3/08, H02G 3/22, H02S 40/34

(54) **WATERPROOF ENCLOSURE ASSEMBLY**

(30) Priority: 08.08.2023 US 202363518227 P
(71) Applicant: Hoffman Enclosures, Inc., Anoka, MN 55303 (US)
(72) Inventor: Ollila, Jennifer, Fridley, 55432 (US); Nepsha, William Joseph, Zimmerman, 55398 (US); Taylor, Benjamin, Andover, 55304 (US); Myers, Dana, Anoka, 55303 (US); Gaveske, Ryan, Anoka, 55303 (US); Turner, John, Anoka, 55303 (US)
(74) Representative: Barker Brettell LLP

(57) **Abstract**

A rooftop enclosure assembly (100; 200; 300) is provided for mounting on a rooftop surface. The rooftop enclosure assembly can include an enclosure (102; 202; 302) and an enclosure gasket (104; 204; 304). The enclosure gasket can be adhered to the enclosure, to be positioned between the enclosure and the rooftop surface, to provide a watertight seal. The enclosure gasket can include butyl rubber.

## Description

### CROSS-REFERENCE TO RELATED APPLICATIONS

This application claims priority to U.S. Provisional Application No. 63/518,227, filed August 8, 2023.

### BACKGROUND

The apparatuses and methods disclosed herein relate generally to weatherproof multipurpose enclosures configured to couple to the exterior of a structure. In particular, some examples relate to rooftop enclosures for solar power generation ("solar") systems.

Increasingly, property owners are installing electrical or mechanical components on the exterior of buildings or other structures. For example, some property owners have begun installing solar panels on roofs to reduce the reliance on traditional power suppliers.

In some cases, installation and proper operation of an electrical or mechanical component does not require the component be coupled to an external part or power source (e.g., the component itself includes a power supply). Thus, the electrical or mechanical component can be installed as a self-contained unit without any cables, wires, or other connectors extending therefrom.

However, in other cases, installation and proper operation of an electrical or mechanical component does require the component be coupled to an external part or power source. To couple the electrical or mechanical component to the external part or power source, an installer may be required to route a connector from the exterior of the structure to the interior of the structure. In such a situation, the electrical or mechanical component, the connector, or the interior of the structure may be more susceptible to weather-related damage.

### SUMMARY

Some examples of the disclosed technology provide rooftop enclosure assembly (e.g., solar rooftop enclosure assembly) for mounting on a rooftop surface. The rooftop enclosure assembly can include an enclosure for electrical components, a flashing, and an enclosure gasket. The enclosure gasket can include butyl rubber (e.g., can be integrally formed thereof), arranged between the enclosure and the flashing and adhered to the enclosure and the flashing. The enclosure gasket can provide a seal between the enclosure and the flashing to prevent leakage through a rooftop surface that supports the rooftop enclosure assembly with the flashing arranged between the enclosure gasket and the rooftop surface.

In some examples, the enclosure gasket can be seated directly on the flashing.

In some examples, a plurality of fasteners can secure the enclosure to the rooftop surface or to the flashing and can extend through the enclosure and the enclosure gasket.

In some examples, a conduit can extend through the enclosure gasket and the flashing to route components from within the enclosure through the flashing and the rooftop surface.

In some examples, as projected onto the rooftop surface in an installed configuration, the flashing can have a larger footprint than the enclosure and the enclosure gasket. The enclosure and the enclosure gasket can be selectively securable, in combination, at a plurality of locations on the flashing so that the enclosure gasket is fully overlapping with the flashing.

In some examples, the enclosure can have a corner and the flashing has an upper side relative to a slope of the rooftop surface. The enclosure and the enclosure gasket can be positioned on the flashing with the corner of the enclosure oriented toward the upper side of the flashing.

In some examples, the enclosure and the enclosure gasket can be off-center between the upper side and a lower side of the flashing.

In some examples, the enclosure and the enclosure gasket can be positioned closer to the lower side of the flashing than to the upper side of the flashing.

In some examples, the flashing can be a flexible flashing.

In some examples, the flashing can include EPDM rubber.

In some examples, a thickness of the enclosure gasket can be substantially equal to a thickness of the flashing.

In some examples, a flashing gasket can be adhered to the flashing on an opposite face of the flashing from the enclosure. In an installed configuration, the flashing and the flashing gasket are between the enclosure gasket and the rooftop surface so that the flashing gasket is arranged to be in contact with the rooftop surface.

In some examples, the flashing gasket can include butyl rubber.

In some examples, a thickness of the flashing gasket is substantially equal to a thickness of the flashing.

According to some examples of the disclosed technology, a rooftop enclosure assembly can include an enclosure and an enclosure gasket of butyl rubber. The enclosure can define an internal area for electronic components and a lower surface that includes one or more openings for passage of components from the internal area. The enclosure gasket can be adhered to the lower surface of the enclosure with the enclosure gasket collectively surrounding the one or more openings on the lower surface of the enclosure. The enclosure gasket can be positioned between the enclosure and a rooftop surface to provide a watertight seal therebetween when the rooftop enclosure assembly is mounted to the rooftop surface.

In some examples, the enclosure gasket can include one or more pre-formed apertures that align with the one or more opening in the lower surface of the enclosure to route at least one of a fastener, a cable, a wire, or another connectors from the internal area of enclosure to the rooftop surface.

In some examples, the enclosure gasket can be formed in a ring-shape. In some examples, a center opening of the ring-shape can be positioned to provide unobstructed passage between the enclosure and the rooftop surface.

In some examples, the enclosure gasket can have a thickness of about 1/8 of an inch.

Other examples of the disclosed technology can provide a method of installing a rooftop enclosure assembly on a rooftop surface. An enclosure of the rooftop enclosure assembly can be oriented relative to the rooftop surface, with an enclosure gasket of butyl rubber adhered to a body of the enclosure between the enclosure and the rooftop surface. The enclosure and the enclosure gasket can be secured to the rooftop surface, including urging the enclosure into the butyl rubber to form a seal therebetween.

In some examples, the enclosure and the enclosure gasket can be positioned on a flashing of the rooftop enclosure assembly, with the enclosure gasket between the enclosure and the flashing. The flashing can be oriented, relative to the rooftop surface, with the flashing between the enclosure gasket and the rooftop surface. Securing the enclosure and the enclosure gasket to the rooftop surface can include securing the flashing to the rooftop surface.

Features which are described in the context of separate aspects and/or embodiments of the invention may be used together and/or be interchangeable wherever possible. Similarly, where features are, for brevity, described in the context of a single embodiment, those features may also be provided separately or in any suitable sub- combination. Features described in connection with the rooftop enclosure assembly may have corresponding features definable and/or combinable with respect to a method or vice versa, and these embodiments are specifically envisaged.

### BRIEF DESCRIPTION OF THE DRAWINGS

The accompanying drawings, which are incorporated in and form a part of this specification, illustrate examples of the disclosed technology and, together with the description, serve to explain the principles of the disclosed technology:
FIG. 1 is an exploded view of a rooftop enclosure assembly according to an example of the disclosed technology;
FIG. 2 is an axonometric view of the rooftop enclosure assembly of FIG. 1;
FIG. 3 is a front elevation view of the rooftop enclosure assembly of FIG. 1;
FIG. 4 is a top plan view of the rooftop enclosure assembly of FIG. 1;
FIG. 5 is an exploded isometric view of a rooftop enclosure assembly according to another example of the disclosed technology;
FIG. 6 is an isometric view of the rooftop enclosure assembly of FIG. 5;
FIG. 7 is a front elevation view of the rooftop enclosure assembly of FIG. 5;
FIG. 8 is a top plan view of the rooftop enclosure assembly of FIG. 5;
FIG. 9 is an exploded isometric view of a rooftop enclosure assembly according to another example of the disclosed technology;
FIG. 10 is an isometric view of the rooftop enclosure assembly of FIG. 9;
FIG. 11 is a front elevation view of the rooftop enclosure assembly of FIG. 9; and
FIG. 12 is a top plan view of the rooftop enclosure assembly of FIG. 9.

### DETAILED DESCRIPTION

Before any examples of the disclosed technology are explained in detail, it is to be understood that the disclosed technology is not limited in its application to the details of construction and the arrangement of components set forth in the following description or illustrated in the following drawings. The disclosed technology is capable of other examples and of being practiced or of being carried out in various ways.

The following discussion is presented to enable a person skilled in the art to make and use examples of the disclosed technology. Various modifications to the illustrated examples will be readily apparent to those skilled in the art, and the generic principles herein can be applied to other examples and applications without departing from the disclosed technology. Thus, the disclosed technology is not intended to be limited to examples shown, but are to be accorded the widest scope consistent with the principles and features disclosed herein. The following detailed description is to be read with reference to the figures, in which like elements in different figures have like reference numerals. The figures, which are not necessarily to scale, depict selected examples and are not intended to limit the scope of examples of the disclosed technology. Skilled artisans will recognize the examples provided herein have many useful alternatives and fall within the scope of examples of the disclosed technology.

As described above, installing an electrical or mechanical component to the exterior of a structure may require a connector to be coupled between the component and the interior of the structure. For example, installation of a solar panel on a roof of a structure may require cables, wires, or the like extending from the solar panel be coupled to a junction or fuse box, which can be located inside the structure. To protect the cables, wires, or the interior of the structure from weather-related damage, the cables or wires can be routed inside the structure via a flashed enclosure assembly placed on the roof.

Existing rooftop enclosure assemblies provide a rigid plastic sheet for flashing applications on shingle roofs. These enclosure assemblies provide the base of the enclosure molded onto the flashing as one unit. The enclosure itself thus can divert water, but the enclosure size is also fixed for any given flashing. Further, this arrangement may not be suitable for some rooftop surfaces, including various types of tile roofs. Additionally, conventional rooftop enclosure assemblies may require cutting existing roofing material (e.g., tiles) for installation.

Examples of the rooftop enclosure assemblies described herein can address these and other issues, and can be used on tile, shingle, and other roofs for different mechanical, electrical, solar, radio frequency, or other applications. In some examples, the rooftop enclosure assemblies may include flexible flashing to provide fluid-ingress protection between an enclosure and a rooftop. Thus, for example, the flashing can follow the contours of a particular rooftop, to better support an enclosure and prevent water from leaking into the building structure. In different examples, different types of flexible material can be selected (e.g. EPDM (ethylene propylene diene monomer) rubber, Neoprene, ABS (acrylonitrile butadiene styrene), Polycarbonate). In contrast, as described above, existing flashed enclosures typically utilize a rigid metal sheet.

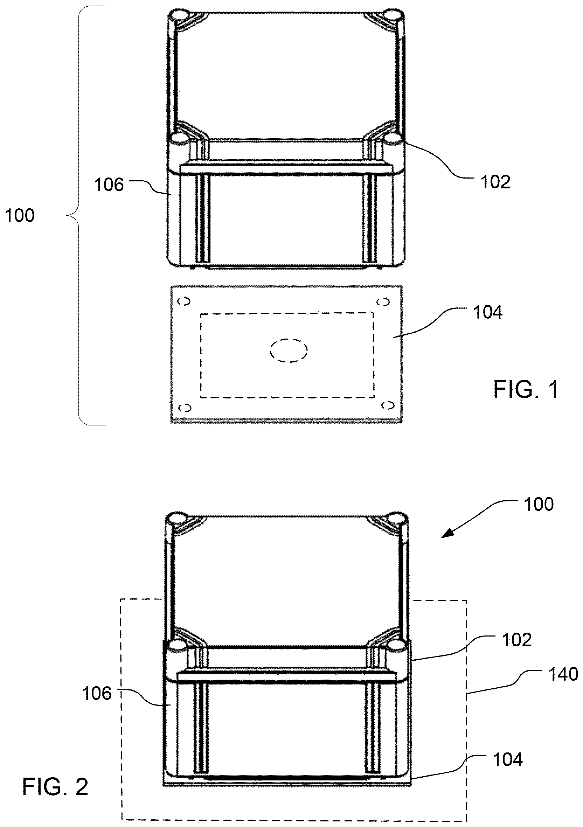

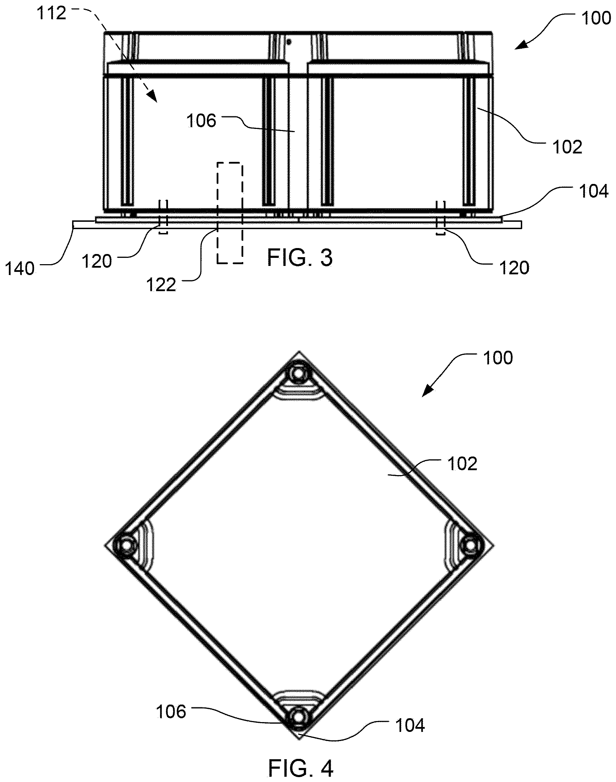

FIGS. 1 through 4 illustrate a rooftop enclosure assembly 100 including an enclosure 102 and an enclosure gasket 104 coupled (e.g., adhered) to the enclosure 102. The enclosure gasket 104 can be configured to be substantially identical in size to a bottom surface of the enclosure 102, or can be otherwise sized. The enclosure gasket 104 can be include (e.g., be integrally formed from) butyl rubber, which can be self-adherent, or self-fusing, to the enclosure 102 when placed thereon. The butyl rubber material constituting the enclosure gasket 104 also allows the enclosure 102 to be flexibly placed at a variety of locations on a rooftop surface 140 (see, e.g., FIGS. 2 and 3) and provided a liquid-tight seal between the enclosure 102 and the rooftop surface because of the inherent characteristics of butyl rubber (e.g., high adherence, flexibility, and resistance to hardening over time).

In some examples, the enclosure gasket 104 can be slightly smaller than the bottom surface of the enclosure 102. In this case, for example, the enclosure gasket 104 can be configured expand to a footprint size substantially identical to the footprint size of the bottom surface of the enclosure 102, when the enclosure 102 is secured to the rooftop surface and correspondingly compresses the gasket 104. In some examples, the enclosure gasket 104 can have a thickness of about 1/8 of an inch in an uncompressed state.

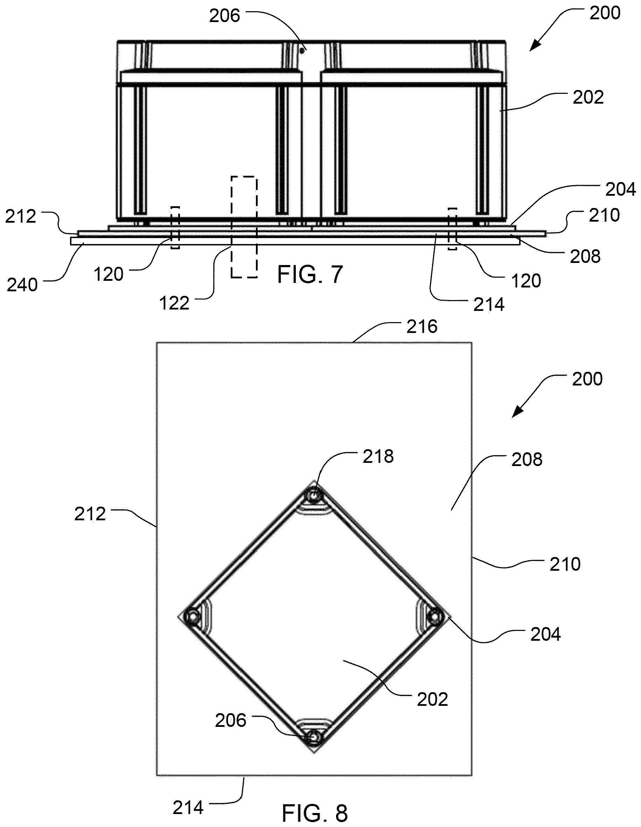

In some examples, the enclosure gasket 104 can have apertures provided therein in predetermined locations to align with holes in the enclosure 102 for receiving at least one of fasteners, cables, wires, or other connectors extending from the enclosure 102 and through to the rooftop surface. For example, as shown in particular in FIG. 3, and also applicable in other configurations (see, e.g., FIG. 7), multiple fasteners 120 can extend from the enclosure through the enclosure gasket 104 to secure the enclosure to a flashing, to a rooftop structure, or to other components. Similarly, a conduit 122 (e.g., pipe) can extend from the enclosure through the enclosure gasket 104 to route wiring or other components from an internal area 112 of the enclosure 102 through the flashing and the rooftop structure.

Such fasteners or conduit(s) can extend through the enclosure gasket 104 so that the gasket 104 forms a seal around the fasteners or conduit(s) (e.g., individually around each) and thereby prevents ingress of fluid into the enclosure 102 or through the rooftop surface. Further, tightening the fasteners 120 (or other engagement) can urge the bottom side of the enclosure 102 into the top side of the gasket 104 - and, correspondingly, can urge the bottom side of the gasket 104 into the rooftop or other supporting structure - and thereby further compressing the gasket 104 between the enclosure 102 and the rooftop for a further improved seal.

In some examples, an enclosure gasket can include pre-formed apertures to receive fasteners, wiring conduits, or other equipment (e.g., for passage of the fasteners 120 and the conduit 122 as shown in various figures). For example, in the configuration of FIG. 1, four fastener openings are provided, with one at each corner of the gasket 104 (and the enclosure 102).

In some examples, the enclosure gasket 104 can be configured in a ring-shape, with a center opening positioned in the ring-shape (e.g., as shown is dashed relief for the various enclosure gaskets of FIGS 1, 5, and 9). Thus, for example, an enclosure gasket can be formed to provide a perimeter seal while also providing unobstructed passage for wiring or other components to pass between the enclosure 102 and the rooftop surface (e.g., through aligned holes therein).

Correspondingly, in these and other examples, the enclosure gasket 104 can seat against a body of an enclosure (e.g., a bottom wall thereof, as shown) to define a sealing perimeter. In some examples, the sealing perimeter can fully surround openings that extend through the bottom wall of an enclosure into the interior of the enclosure. For example, a sealing perimeter can collectively surround some or all of the openings for the fasteners 120, the conduit 122, or other components that pass from inside the enclosure into or through a rooftop surface, or can individually surround one or more particular openings. Moreover, in some cases, sealing perimeters can be similarly formed for flashing gaskets, as further discussed below.

In some examples, installation of the rooftop enclosure assembly 100 to a rooftop surface includes positioning a corner of the enclosure 102 (e.g., corner 106) uphill relative to the rest of the enclosure 102. This arrangement of the enclosure 102 relative to the rooftop surface permits the corner 106 to divert water around the enclosure 102 and down the rooftop surface. Further installation can include securing the enclosure 102 to the rooftop surface with fasteners (e.g., screws or nails). However, other arrangements are possible, including any variety of other rotational orientations.

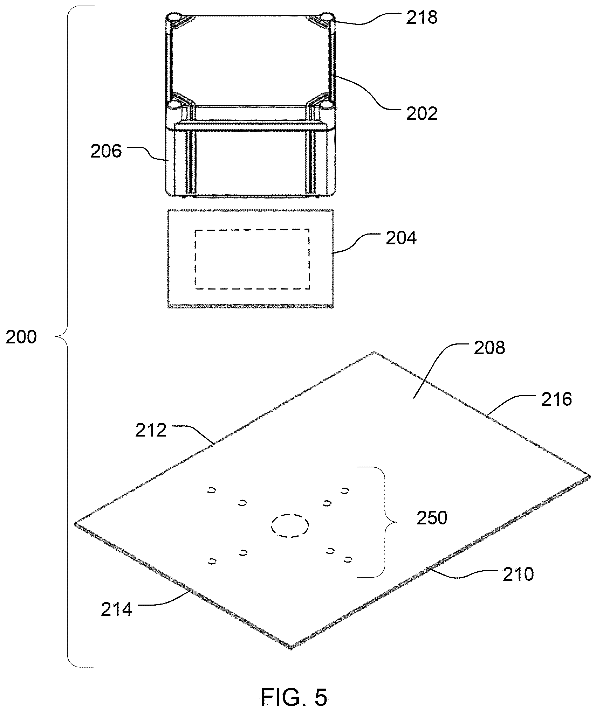

FIGS. 5 through 8 illustrate another example of a rooftop enclosure assembly 200 according to the disclosed technology, as also can be secured to a rooftop surface. In many aspects, the rooftop enclosure assembly 200 is similar to the rooftop enclosure assembly 100 described above and similar numbering in the 200 series is used for the rooftop enclosure assembly 200. For example, the rooftop enclosure assembly 200 has an enclosure 202 with a corner 206 and an enclosure gasket 204 coupled to the enclosure 202 (e.g., with the enclosure 202 being substantially identical to the enclosure 102, and the enclosure gasket 204 being substantially identical to the enclosure gasket 104).

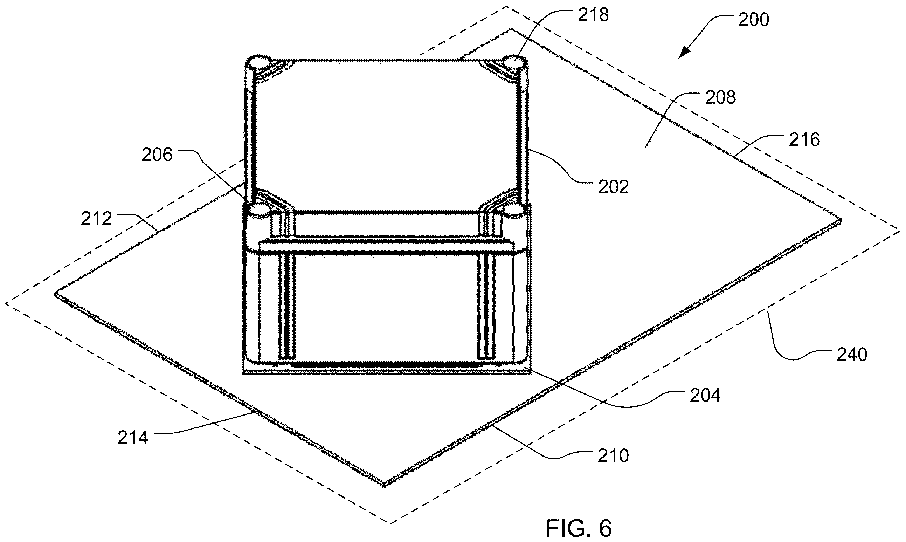

In some aspects, however, the rooftop enclosure assemblies 100, 200 differ from each other. For example, the rooftop enclosure assembly 200 further includes a flashing 208. The combination of the enclosure 202 and the enclosure gasket 204 is coupled to the flashing 208, and the flashing 208 can be installed against the relevant support surface (e.g., a rooftop surface 240, as shown in FIGS. 6 and 7) to support the enclosure 202 and enclosure gasket relative to the support surface.

In some examples, as also discussed above, the enclosure gasket 204 can comprise butyl rubber, which can be self-adherent to the flashing 208 or to the enclosure 202. In some examples, the flashing 208 can be formed from EPDM rubber, or other suitably flexible and strong material. In some examples, the flashing 208 can have a thickness substantially identical to the enclosure gasket 204.

As shown in the figures, the flashing 208 has a larger footprint than the enclosure 202 and the enclosure gasket 204, as projected onto a rooftop surface on which the assembly 200 is installed. The combination of the enclosure 202 and enclosure gasket 204 can therefore be selectively positioned on the flashing 208 at multiple different location, at each of which the entire enclosure gasket 204 is fully overlapping with the flashing 208 (i.e., the entire footprint of the gasket 204 is contained within the edge boundaries of the flashing 208). For example, as shown in the FIGS. 5 through 8, the combination of the enclosure 202 and the enclosure gasket 204 is centered between a left side 210 and a right side 212 of the flashing 208. Further, the enclosure 202 and gasket 204 are positioned off-center between an upper side 214 and a lower side 216 of the flashing 208 In particular, for example, the enclosure 202 and the enclosure gasket 204 can be positioned closer to the lower side 216 than to the upper side 214, and the corner 206 of the enclosure 202 can be positioned closer to the upper side 214 than to the lower side 216. In this configuration, the area of the flashing 208 between the corner 206 of the enclosure 202 and the upper side 214 of the flashing 208 can be slid under a layer of shingles or other roof material installed uphill from the enclosure 202 for still further improvement in liquid protection. In some examples, the portion of the flashing 208 under the uphill shingles (or other roof layer) can be configured secured to the rooftop surface to secure the flashing 208 in place.

In some examples, the combination of the enclosure 202 and the enclosure gasket 204 can be positioned on the flashing 208 to define a "skirt," or section of the flashing 208 between a corner 218 of the box (opposite the corner 206) and the lower side 216 of the flashing 208. The skirt can be configured to overlay roofing shingle layer installed downhill form the enclosure 202.

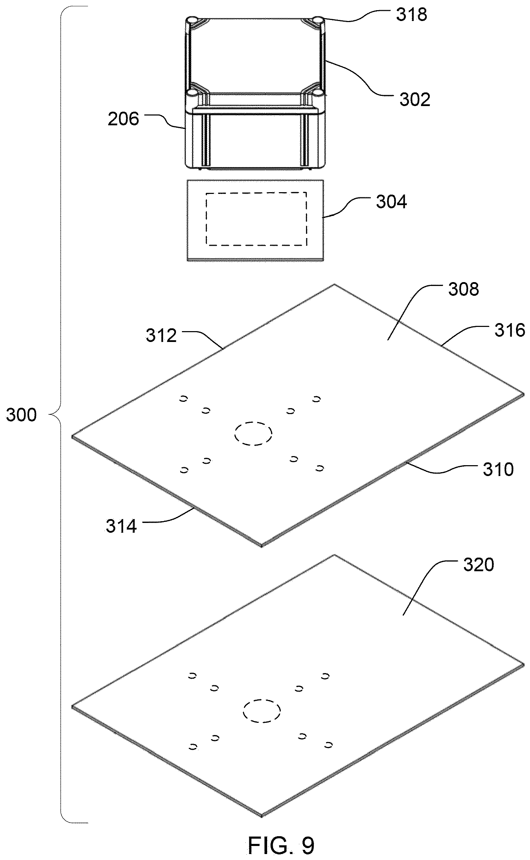

In some examples, the flashing 208 can include locating features 250 to indicate different mounting locations of the combination of the enclosure 202 and the enclosure gasket 204 on the flashing 208, other mounting locations (e.g., for connection to a rooftop surface), or through openings (e.g., for passage of wiring conduits, etc.). The locating features 250, for example, can be through-holes, indented outlines or apertures, or various other detents, as shown schematically with dashed lines in FIG. 5. Similarly, in some examples, one or more other components can also (or alternatively) include locating features (e.g., as shown schematically in FIGS. 1 and 9, similarly to FIG. 5). Use of locating features can allow for relatively easy attachment of combinations of the enclosure 202 and enclosure gasket 204 of a wide range of sizes, as well as easy assembly of other system components (e.g., wiring conduits to pass through a rooftop surface) without the risk of water leakage. In some cases, use of locating features that are formed as indents or detents in particular may be helpful, as multiple locating features can be included for select installation of various enclosures, gaskets, or enclosure configurations (e.g., particular enclosure of gasket profiles or sizes), with unused locating features remaining sealed to prevent leakage (e.g., as may be beneficially provided, in particular, by the use of butyl rubber).

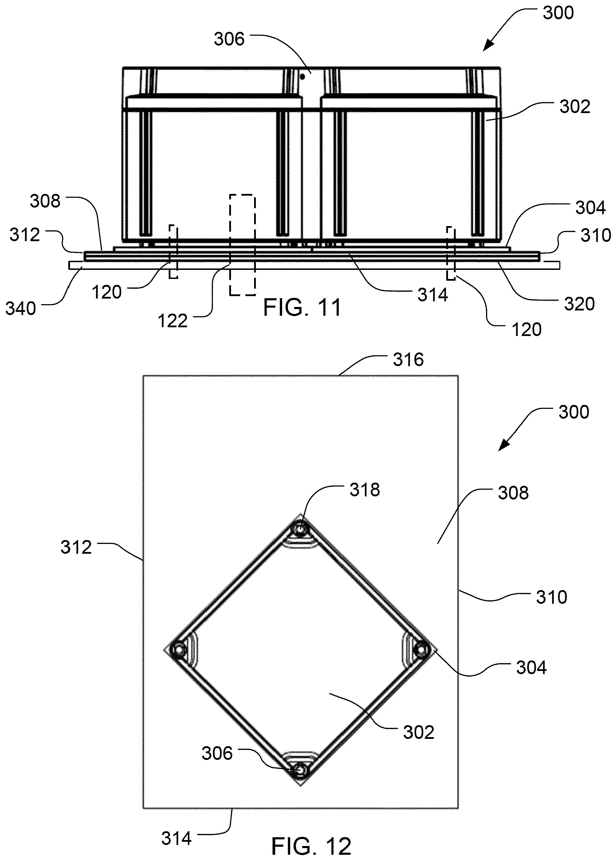

FIGS. 9 through 12 illustrate another example of a rooftop enclosure assembly 300 according to the disclosed technology, as also can be secured to a rooftop surface. In many aspects, the rooftop enclosure assembly 300 is similar to the rooftop enclosure assembly 200 described above and similar numbering in the 300 series is used for the rooftop enclosure assembly 300. For example, the rooftop enclosure assembly 300 has an enclosure 302 (e.g., substantially identical to the enclosure 202), with corners 306, 318, an enclosure gasket 304 coupled to the enclosure 302 (e.g., substantially identical to the gasket 204), and a flashing 308 with a left side 310, a right side 312, an upper side 314, and a lower side 316 (e.g., substantially identical to the flashing 208).

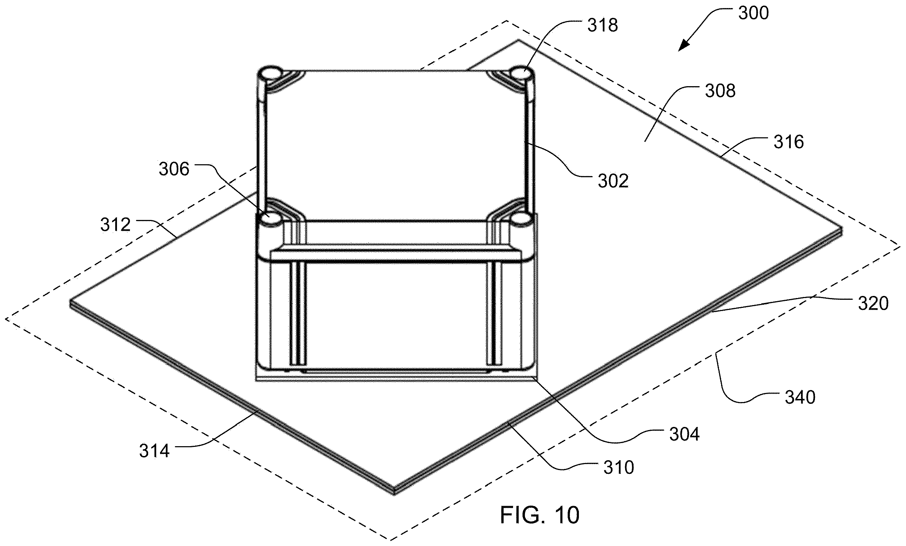

In some aspects, however, the rooftop enclosure assemblies 200, 300 differ from each other. For example, the rooftop enclosure assembly 300 further includes a flashing gasket 320. The flashing gasket 320 can be coupled (e.g., adhered) to the flashing 308 opposite the enclosure gasket 304 and is configured to be placed against a rooftop surface 340 (see, e.g., FIG. 10) when the rooftop enclosure assembly 300 is installed thereon. In some examples, the flashing gasket 320 can be substantially identical in size (e.g., length, width, or thickness) to the flashing 308 as shown in the figures. In some examples, the flashing gasket 320 can be slightly smaller in length or width than the flashing 308 and configured to expand to a size substantially identical to the size of the flashing 308 when the flashing 308 is secured to the rooftop surface. In some examples, the flashing gasket 320 can comprise butyl rubber, which, as discussed above, can be self-adherent to the flashing 308 and also to the rooftop surface.

In some implementations, devices or systems disclosed herein can be utilized or installed using methods embodying aspects of the disclosed technology. Correspondingly, description herein of particular features or capabilities of a device or system is generally intended to inherently include disclosure of a method of using such features for intended purposes and of implementing such capabilities. Similarly, express discussion of any method of using a particular device or system, unless otherwise indicated or limited, is intended to inherently include disclosure, as examples of the disclosed technology, of the utilized features and implemented capabilities of such device or system.

In this regard, for example, some implementations can include assembly or installation of any of the assemblies 100, 200, 300 described above. For example, a relevant enclosure can be oriented relative to a rooftop surface for installation, with an enclosure gasket of butyl rubber (e.g., the gasket 104, 204, 304 between the enclosure and the rooftop surface (e.g., with the gasket pre-adhered to the enclosure, or with the gasket pre-adhered to the rooftop surface). With the gasket thus oriented, the enclosure and the enclosure gasket can be secured to the rooftop surface so that the gasket adheres to a body of the enclosure and thereby provides sealing against liquid ingress. For example, by tightening the fasteners 120 (or other action), the enclosures 102, 202, 302 can be urged into the relevant gasket to form a seal between the gasket and the enclosure.

In some cases, these operations can provide further (or alternative) seals interposed between the enclosure and the rooftop. For example, in the case of a direct installation of the enclosure onto a rooftop surface, urging an enclosure into an enclosure gasket can also provide (e.g., establish, maintain, or enhance) a seal between the enclosure gasket and rooftop material. In other cases, for example, a similar seal can be provided between the enclosure gasket and a flashing, between a flashing gasket and the flashing, or between a flashing gasket and the rooftop surface.

In some cases, before being secured to a rooftop surface, an enclosure and an enclosure gasket can be positioned on a flashing of the rooftop enclosure assembly, with the enclosure gasket between the enclosure and the flashing. The collective assembly can then be installed so that the flashing is between the enclosure gasket and the rooftop surface. For example, the flashing can be secured to a rooftop surface before the enclosure and the enclosure gasket are installed onto the flashing. Or, for example, the flashing can be secured to the rooftop surface after the enclosure and the enclosure gasket are installed onto the flashing.

In some cases, securing an enclosure to a flashing, or securing a flashing (or an enclosure) to a rooftop surface, can include advancing fasteners (e.g., screws) through the components to be secured and also through one or more butyl rubber (or other) gaskets that are interposed between the components to be secured. For example, screws can be driven through locating features within an enclosure cavity (i.e., internal to an enclosure body) through parts of a butyl rubber gasket that are included in a perimeter seal against the enclosure body. In some cases, a pipe or other conduit can be routed from an enclosure through one or more gaskets - and a flashing, as relevant - to provide a sealed guide for wires or other components to pass from an interior cavity of the enclosure into the relevant building structure on which the enclosure is mounted. For example, a conduit can be pressed through a locating feature on an enclosure gasket or a flashing gasket to provide a sealed passage for wires from within an enclosure cavity through a rooftop surface.

Thus, examples of the disclosed technology can provide improved assemblies for rooftop solar enclosure systems and other enclosure assemblies. In particular, some examples can include butyl rubber gaskets that can seat directly on an enclosure body, a flashing, or a rooftop surface to provide a seal against liquid ingress (e.g., into the enclosure or relevant building via fastener or conduit openings). In some examples, a single gasket can accordingly provide a complete seal around a relevant perimeter for an enclosure, without requiring cumbersome precise alignment of multiple gaskets (e.g., with associated brackets) or time-consuming sealing of multiple fastener or conduit openings (e.g., on an enclosure and an associated flashing). Further, for example, the use of full-perimeter butyl rubber gaskets can allow for adaptable installation of a variety of enclosure configurations (e.g., sizes, profiles, locations, etc.) without cumbersome customization processes and without compromise to the integrity of the corresponding seal.

As used herein, unless otherwise defined or limited, directional terms are used for convenience of reference for discussion of particular figures or examples. In particular, as used herein, the relative terms "uphill," "downhill," "upper," and "lower" shall be defined from the perspective of the rooftop enclosure assembly when arranged on a rooftop surface. Thus, "uphill" or "upper" refers to directions or features toward the upward direction of a slope defined by the rooftop surface and "downhill" or "lower" refers to directions or features toward the downward direction of the slope defined by the rooftop surface. In this context "top" and "bottom" can be used to designate features relative to gravity (e.g., with a "top" surface of an installed enclosure facing away from the rooftop surface and a "bottom" surface of the enclosure facing toward the rooftop surface.)

Also as used herein with respect to a reference value, unless otherwise limited or defined, the terms "about" and "approximately," refer to variations from the reference value of ± 20% or less (e.g., ± 15, ± 10%, ± 5%, etc.), inclusive of the endpoints of the range. Similarly, as used herein with respect to a reference value, the term "substantially equal" (and the like) refers to variations from the reference value of less than ± 5% (e.g., ± 2%, ± 1%, ± 0.5%) inclusive. Where specified in particular, "substantially" can indicate a variation in one numerical direction relative to a reference value. For example, the term "substantially less" than a reference value (and the like) indicates a value that is reduced from the reference value by 30% or more (e.g., 35%, 40%, 50%, 65%, 80%), and the term "substantially more" than a reference value (and the like) indicates a value that is increased from the reference value by 30% or more (e.g., 35%, 40%, 50%, 65%, 80%).

Also as used herein, unless otherwise limited or defined, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "only one of," or "a single one of." For example, a list of "only one of A, B, or C" indicates options of: A, but not B and C; B, but not A and C; and C, but not A and B. In contrast, a list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more A, one or more B, and one or more C. Similarly, a list preceded by "a plurality of' (and variations thereon) and including "or" to separate listed elements indicates options of one or more of each of multiple of the listed elements. For example, the phrases "a plurality of A, B, or C" and "two or more of A, B, or C" indicate options of: one or more A and one or more B; one or more B and one or more C; one or more A and one or more C; and one or more A, one or more B, and one or more C.

Also as used herein, unless otherwise limited or defined, "integral" and derivatives thereof (e.g., "integrally") describe elements that are manufactured as a single piece without fasteners, adhesive, or the like to secure separate components together. For example, an element that is stamped, cast, or otherwise molded as a single-piece component from a single piece of sheet metal or other continuous single piece of material, without rivets, screws, other fasteners, or adhesive to hold separately formed pieces together, is an integral (and integrally formed) element. In contrast, an element formed from multiple pieces that are separately formed initially then later fastened together, is not an integral (or integrally formed) element.

Also as used herein, unless otherwise limited or defined, "substantially identical" refers to characteristics (e.g., size) of two or more components or systems with variation between the characteristic of the components or systems that are within the limitations of acceptable tolerances for the relevant process and specification. For example, characteristics of two components can be considered to be substantially identical if the characteristics of the components are within the same acceptable dimensional tolerances (e.g., as specified for a particular process or product). With respect to substantially identical dimensional sizes of a set of components, "substantially identical" indicates a dimensional size difference of each of the components no greater than ± 5%, inclusive.

Unless otherwise specifically indicated, ordinal numbers are used herein for convenience of reference, based generally on the order in which particular components are presented in the relevant part of the disclosure. In this regard, for example, designations such as "first," "second," etc., generally indicate only the order in which a thus-labeled component is introduced for discussion and generally do not indicate or require a particular spatial, functional, temporal, or structural primacy or order. Relatedly, similar or identical components may be referred to with different ordinal numbers in different contexts.

Although certain examples have been described herein, it will be understood by those skilled in the art that many aspects of the enclosure assemblies shown and described in the present disclosure may be differently combined or modified to form still further embodiments or acceptable examples. All such modifications and variations are intended to be included herein within the scope of this disclosure. A wide variety of designs and approaches are possible.

Features which are described in the context of separate embodiments or examples may also be provided in combination in a single embodiment or example. Conversely, various features which are, for brevity, described in the context of a single embodiment or example, may also be provided separately or in any suitable sub-combination. The applicant hereby gives notice that new claims may be formulated to such features and/or combinations of such features during the prosecution of the present application or of any further application derived therefrom. Features of the rooftop enclosure assembly and/or components thereof described may be incorporated into/used in corresponding methods and vice versa.

Moreover, while illustrative embodiments have been described herein, the scope of any and all embodiments having equivalent elements, modifications, omissions, combinations (e.g., of aspects across various embodiments), adaptations or alterations as would be appreciated by those in the art based on the present disclosure. The limitations in the claims are to be interpreted broadly based on the language employed in the claims and not limited to the examples described in the present specification or during the prosecution of the application, which examples are to be construed as non-exclusive. Further, the actions of the disclosed processes and methods may be modified in any manner, including by reordering actions or inserting additional actions or deleting actions. It is intended, therefore, that the specification and examples be considered as illustrative only, with a true scope and spirit being indicated by the claims and their full scope of equivalents.

## Claims

1. A rooftop enclosure assembly (100; 200; 300) for a rooftop surface (240; 340), the rooftop enclosure assembly comprising:
an enclosure (202; 302) for electrical components;
a flashing (208; 308); and
an enclosure gasket (204; 304) including butyl rubber, arranged between the enclosure and the flashing and adhered to the enclosure and the flashing;
the enclosure gasket providing a seal between the enclosure and the flashing to prevent leakage through a rooftop surface that supports the rooftop enclosure assembly with the flashing arranged between the enclosure gasket and the rooftop surface.

2. The rooftop enclosure assembly of claim 1, wherein the enclosure gasket (202; 302) is seated directly on the flashing (208; 308) and optionally or preferably wherein a plurality of fasteners (120) that secure the enclosure (202; 302) to the rooftop surface (240; 340) or to the flashing (208; 308) extend through the enclosure (202; 302) and the enclosure gasket (204; 304).

3. The rooftop enclosure assembly of any of the preceding claims, wherein a conduit (122) extends through the enclosure gasket (204; 304) and the flashing (208; 308) to route components from within the enclosure through the flashing and the rooftop surface.

4. The rooftop enclosure assembly of any of the preceding claims, wherein, as projected onto the rooftop surface in an installed configuration, the flashing (208; 308) has a larger footprint than the enclosure (202; 302) and the enclosure gasket (204; 304), the enclosure (202; 302) and the enclosure gasket (204; 304) being selectively securable, in combination, at a plurality of locations on the flashing (208; 308) so that the enclosure gasket is fully overlapping with the flashing.

5. The rooftop enclosure assembly of any of the preceding claims, wherein the enclosure (202; 302) has a corner (206; 306) and the flashing has an upper side (214; 314) relative to a slope of the rooftop surface; and
wherein the enclosure and the enclosure gasket are positioned on the flashing with the corner (206; 306) of the enclosure oriented toward the upper side (214; 314) of the flashing.

6. The rooftop enclosure assembly of claim 5, wherein one or more of
the enclosure (202; 302) and the enclosure gasket (204; 304) are off-center between the upper side (214; 314) and a lower side (216; 316) of the flashing; or
the enclosure and the enclosure gasket are positioned closer to the lower side of the flashing than to the upper side of the flashing.

7. The rooftop enclosure assembly of any of the preceding claims, wherein the flashing (208; 308) is a flexible flashing, optionally or preferably including EPDM rubber.

8. The rooftop enclosure assembly of any of the preceding claims, wherein a thickness of the enclosure gasket (204; 304) is substantially equal to a thickness of the flashing (208; 308).

9. The rooftop enclosure assembly (300) of any of the preceding claims, further comprising:
a flashing gasket (320), adhered to the flashing (308) on an opposite face of the flashing from the enclosure (302);
wherein, in an installed configuration, the flashing (308) and the flashing gasket (320) are between the enclosure gasket (304) and the rooftop surface (340) so that the flashing gasket (320) is arranged to be in contact with the rooftop surface (340).

10. The rooftop enclosure assembly of claim 9, wherein the flashing gasket (320) includes butyl rubber.

11. The rooftop enclosure assembly of any of the preceding claims, wherein the enclosure gasket (204; 304) is seated on a lower surface of the enclosure (202; 302) that includes one or more openings for passage of components from an internal area of the enclosure that houses the electrical components.

12. The rooftop enclosure assembly of claim 11, wherein the enclosure gasket (204; 304) includes one or more pre-formed apertures that align with the one or more openings on the lower surface of the enclosure (202; 302) to route at least one of a fastener, a cable, a wire, or another connectors from the internal area of enclosure to the rooftop surface.

13. The rooftop enclosure assembly of any of the preceding claims, wherein the enclosure gasket (204; 304) is formed in a ring-shape, with a center opening of the ring-shape positioned to provide unobstructed passage between the enclosure (202; 302) and the rooftop surface.

14. A method of installing a rooftop enclosure assembly (100; 200; 300) on a rooftop surface (140; 240; 340), the method comprising:
orienting an enclosure (102; 202; 302) of the rooftop enclosure assembly relative to the rooftop surface (140; 240; 340); and
with an enclosure gasket (104; 204; 304) of butyl rubber adhered to a body of the enclosure (102; 202; 302) between the enclosure and the rooftop surface, securing the enclosure and the enclosure gasket to the rooftop surface, including urging the enclosure into the butyl rubber to form a seal therebetween.

15. The method of claim 14, further comprising:
positioning the enclosure (202; 302) and the enclosure gasket (204; 304) on a flashing (208; 308) of the rooftop enclosure assembly, with the enclosure gasket between the enclosure and the flashing; and
orienting the flashing (208; 308) relative to the rooftop surface, with the flashing between the enclosure gasket (204; 304) and the rooftop surface (240; 340);
wherein securing the enclosure (202; 302) and the enclosure gasket (204; 304) to the rooftop surface includes securing the flashing (208; 308) to the rooftop surface.
